# EUROPEAN PATENT APPLICATION

(11) **EP 4 625 151 A1**
(43) Date of publication of application: **01.10.2025**
(21) Application number: 23894607.3
(22) Date of filing: 21.11.2023
(51) Int. Cl.: G06F 8/60, G06N 3/10

(54) **INFORMATION PROCESSING DEVICE, PROGRAM, AND INFERENCE METHOD**

(30) Priority: 24.11.2022 JP 2022187354
(71) Applicant: Resonac Corporation, Tokyo 105-7325 (JP)
(72) Inventor: SHIMIZU, Yohei, Tokyo 105-7325 (JP); NISHINO, Shogo, Tokyo 105-7325 (JP); OKUNO, Yoshishige, Tokyo 105-7325 (JP)
(74) Representative: Strehl & Partner mbB
(86) International application number: PCT/JP2023/041893
(87) International publication number: WO 2024/111603

(57) **Abstract**

An information processing device is configured to perform inference by artificial intelligence in a container that is a virtual environment constructed by a container virtualization technology, and includes a build unit configured to build a container image of an operating environment of software that causes the information processing device to perform a screen display, a database operation, and inference by artificial intelligence; and an operation unit configured to perform the screen display, the database operation, and an operation of the inference by the artificial intelligence in the container reproduced by a launch of the container image.

## Description

### TECHNICAL FIELD

The present disclosure relates to an information processing device, a program, and an inference method.

### BACKGROUND

In recent years, in the field of materials development, web applications that perform inference by artificial intelligence (AI), such as image analysis or physical property prediction, are used. The web applications are configured by a large number of software programs. For example, an information processing device constructs a software operating environment for performing inference and operates software for performing the inference. For example, Patent Document 1 discloses a technique for estimating physical properties in accordance with a mixing ratio of a resin composite material.

### Related Art Document

### Patent Document

[Patent Document 1] Japanese Patent Application Laid-Open No. 2022-87429

### SUMMARY OF THE INVENTION

### Problem to be solved by the invention

An application developer needs to construct many software operating environments constituting a web application, for example, but may need to check whether the difference in version affects the operation, and therefore, it takes time and effort to install each piece of software. Additionally, when multiple web applications share the same server device, the application developer needs to switch to an operating environment suitable for the software of the web application to be operated, but this is a troublesome task because the switching is performed manually. Here, Patent Document 1 does not solve the above-described problem.

The present disclosure aims to provide an information processing device, a program, and an inference method that facilitate switching to an operating environment suitable for software to be operated.

### Means for Solving Problem

The present disclosure includes the following configurations.
[1] An information processing device configured to perform inference by artificial intelligence in a container that is a virtual environment constructed by a container virtualization technology, the information processing device including:
   a build unit configured to build a container image of an operating environment of software that causes the information processing device to perform a screen display, a database operation, and inference by artificial intelligence; and
   an operation unit configured to perform the screen display, the database operation, and an operation of the inference by the artificial intelligence in the container reproduced by a launch of the container image.
[2] The information processing device as described in [1], wherein the operation unit is configured to cause a plurality of said containers reproduced by the launch of the container image to cooperate as one web application.
[3] The information processing device as described in [2], wherein the operation unit is configured to distribute, in a container that routes a request from a user to the container operating as the web application, the request to a plurality of said web applications.
[4] The information processing device as described in [2] or [3], wherein the operation unit is configured to operate the web application in a development environment or a production environment by switching a method of launching the containers that cooperate as the one web application, in accordance with a file in which a configuration of one or more said container images to be launched is described.
[5] The information processing device as described in [4],
   wherein the web application operating in the development environment is accessible by a user who develops the web application, and
   wherein the web application operating in the production environment is accessible by a user who uses the web application.
[6] The information processing device as described in any one of [1] to [5], wherein the build unit is configured to add the operating environment of the software that causes the information processing device to perform the inference by the artificial intelligence, to the container image acquired from a storage location, based on an update operation of a user with respect to a file in which information for building the container image is described.
[7] The information processing device as described in any one of [1] to [6], wherein the inference by the artificial intelligence relates to image analysis or physical property prediction used for the materials development.
[8] A program for causing an information processing device configured to perform inference by artificial intelligence in a container that is a virtual environment constructed by a container virtualization technology to perform:
   a procedure of building a container image of an operating environment of software that causes the information processing device to perform a screen display, a database operation, and inference by artificial intelligence; and
   a procedure of performing the screen display, the database operation, and an operation of the inference by the artificial intelligence in the container reproduced by a launch of the container image.
[9] An inference method performed by an information processing device configured to perform inference by artificial intelligence in a container that is a virtual environment constructed by a container virtualization technology, the inference method including:
   a step of building a container image of an operating environment of software that causes the information processing device to perform a screen display, a database operation, and inference by artificial intelligence; and
   a step of performing the screen display, the database operation, and an operation of the inference by the artificial intelligence in the container reproduced by a launch of the container image.

### Effect of the invention

According to the present disclosure, it is possible to easily switch to an operating environment suitable for software to be operated.

### BRIEF DESCRIPTION OF THE DRAWINGS

[FIG. 1A ] FIG. 1A is a diagram for explaining an example of a container virtualization technology.
[FIG. 1B ] FIG. 1B is a diagram for explaining an example of the container virtualization technology.
[FIG. 2] FIG. 2 is a diagram for explaining an example of a web application using the container virtualization technology.
[FIG. 3] FIG. 3 is a configuration diagram of an example of a materials development support system according to the present embodiment.
[FIG. 4] FIG. 4 is a hardware configuration diagram of an example of a computer according to the present embodiment.
[FIG. 5] FIG. 5 is a functional configuration diagram of an example of a materials development support device according to the present embodiment.
[FIG. 6] FIG. 6 is a flowchart illustrating an example of a procedure from development to use of the materials development support system according to the present embodiment.
[FIG. 7] FIG. 7 is a flowchart illustrating an example of a processing procedure for developing a web application in a development environment.
[FIG. 8] FIG. 8 is a flowchart of an example of the process of step S12.
[FIG. 9A] FIG. 9A is a diagram for explaining an example of a web application in which containers cooperate.
[FIG. 9B] FIG. 9B is a diagram for explaining an example of a web application in which containers cooperate.
[FIG. 9C] FIG. 9C is a diagram for explaining an example of a web application in which containers cooperate.
[FIG. 10] FIG. 10 is a flowchart of an example of the processing of step S14.

### DESCRIPTION OF EMBODIMENTS

Next, embodiments of the present invention will be described in detail. Here, the present invention is not limited to the following embodiments.

### [First Embodiment]

### <Container Virtualization Technology>

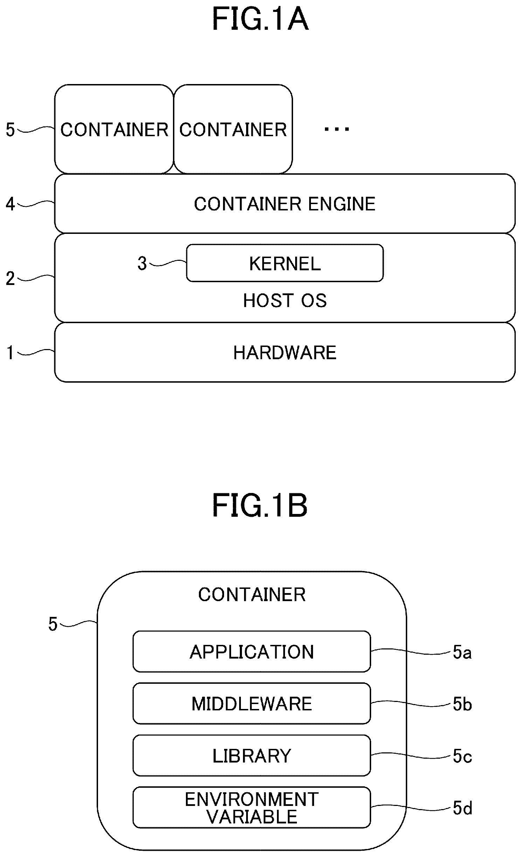

FIG. 1A and FIG. 1B are diagrams for explaining an example of the container virtualization technology. Docker (registered trademark) is an example of a container virtualization technology platform. As illustrated in FIG. 1A, the container virtualization technology uses one or more containers 5, which are constructed virtual environments. In the container virtualization technology, hardware 1 and a kernel 3 of a host OS 2 are shared as an execution platform. Additionally, in the container virtualization technology, a container engine 4 for operating the container 5 is used. For example, a Docker engine is an example of the container engine 4.

In the container virtualization technology, the host OS 2 operates on the hardware 1, which is a single piece of hardware, and one or more containers 5 share the kernel 3 of the host OS 2. The container engine 4 shares the hardware 1 and the kernel 3 of the host OS 2 as an execution base, and operates the container 5. The container 5 is a collection of software operating environments. The container 5 collectively contains information required for reproducing the software operating environments, such as an application 5a, a middleware 5b, a library 5c, and an environment variable 5d, for example, as illustrated in FIG. 1B.

The container 5 is reproduced by launching a container image. The container image can be built in accordance with a Docker file, which is an example of a file in which the contents of the container 5 are described. The Docker file is a mechanism configured to describe the contents of the container 5 as code. In the Docker file, information for building the container image is described.

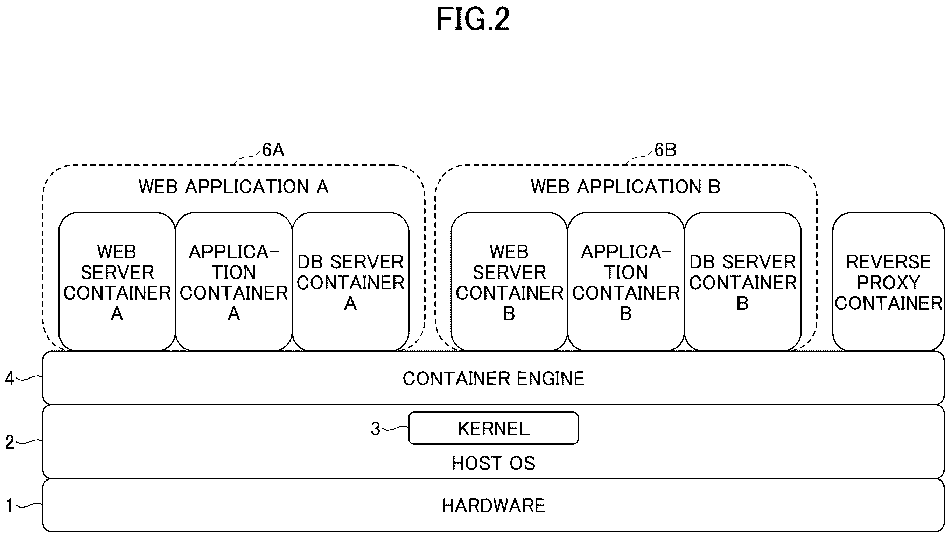

The container image can be acquired from Docker Hub, which is an example of a service for publishing and sharing container images on a cloud. The multiple containers 5 reproduced by the launch of the container image cooperate, thereby operating as a web application as illustrated in FIG. 2, for example.

FIG. 2 is a diagram for explaining an example of a web application using the container virtualization technology. In FIG. 2, multiple cooperating containers operate as web applications 6A and 6B. The cooperative operations of the multiple containers can be performed by using docker-compose, which is an example of a tool for defining and executing multiple containers.

In docker-compose, multiple containers are launched and the containers are caused to communicate with each other and operate as, for example, the web applications 6A and 6B, in accordance with "docker-compose.yml", which is an example of a file in which a configuration of one or more container images to be launched is described.

The web application 6A in FIG. 2 indicates an example in which a web server container A, an application container A, and a DB server container A cooperate. The web application 6B indicates an example in which a web server container B, an application container B, and a DB server container B cooperate. A reverse proxy container is an example of a container that routes a request from a user to containers operating as the web applications 6A and 6B, and distributes the request to the web application 6A or 6B. The web application 6A or 6B can be operated on a web browser.

For example, in the field of materials development, inference by artificial intelligence is utilized from the viewpoint of materials informatics. In the field of materials development, inference by artificial intelligence is utilized for image analysis, physical property prediction, or the like. As an example of a method of a materials developer utilizing inference by artificial intelligence, there are the web applications 6A and 6B that operate on a web browser. The materials developer is an example of a user who uses the web applications 6A and 6B. For example, the materials developer can obtain a result of the inference by causing the web application 6A or 6B to read an image to be analyzed or by inputting experimental conditions.

As illustrated in FIG. 2, multiple containers cooperate in the web application 6A. For example, in the web application 6A, the web server container A, the application container A, and the DB server container A cooperate as examples of containers that perform operations of a screen display, a database operation, and inference by artificial intelligence.

Additionally, in the web application 6B, the web server container B, the application container B, and the DB server container B cooperate as examples of containers that perform operations of a screen display, a database operation, and inference by artificial intelligence.

The web server containers A and B can use, for example, an nginx container. The application containers A and B can use a container obtained by adding an operating environment for inference by artificial intelligence to a PHP container serving as a base of a web application. The DB server containers A and B can use, for example, a mysql container. The process of adding the operating environment for the inference by the artificial intelligence to the PHP container serving as the base of the web application of the application containers A and B will be described later.

As illustrated in FIGS. 1A, 1B, and 2, in the present embodiment, the cooperating containers 5 are used as the web applications 6A and 6B, thereby achieving a simple configuration and improving maintainability, and thus reducing the work load on the application developer. Additionally, in the present embodiment, in the multiple web applications 6A and 6B, the multiple containers 5 cooperating to realize the web application 6A operate separately from the multiple containers 5 cooperating to realize the web application 6B, thereby eliminating mutual interference and improving the development efficiency, and thus reducing the work load on the application developer. The application developer is an example of a user who develops the web applications 6A and 6B.

### <System Configuration>

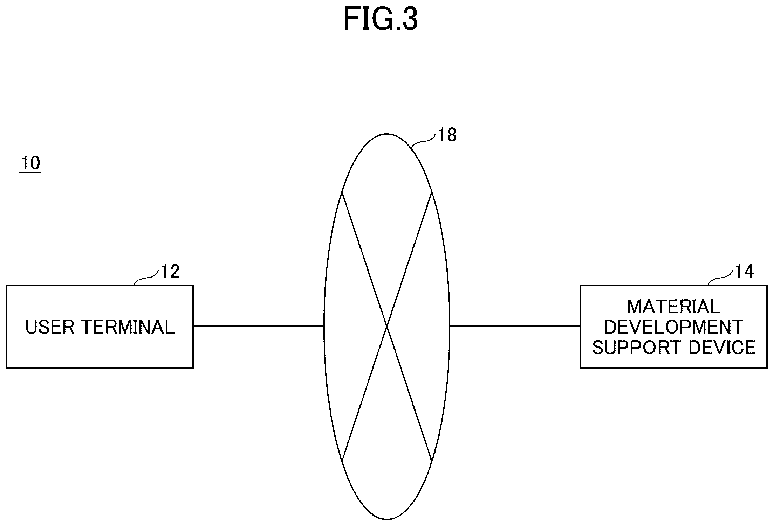

FIG. 3 is a configuration diagram of an example of a materials development support system according to the present embodiment. A materials development support system 10 of FIG. 3 includes a user terminal 12 and a materials development support device 14. The user terminal 12 and the materials development support device 14 are connected to each other via a communication network 18, such as a local area network (LAN) or the Internet, so that data communication can be performed.

The user terminal 12 is an information processing device, such as a PC, a tablet terminal, or a smartphone, operated by a user, such as the materials developer or the application developer. The user terminal 12 transmits a request based on a user operation (a request from the user) to the materials development support device 14, and receives and displays a result of processing corresponding to the request. For example, the user terminal 12 receives an operation for developing a web application from the application developer, transmits a request based on the operation of the application developer to the materials development support device 14, and receives and displays a result of processing corresponding to the request.

Additionally, the user terminal 12 is equipped with a web browser, and causes, for example, the web application 6A or 6B in FIG. 2 received from the materials development support device 14 to operate. For example, the user terminal 12 receives an operation on the web application 6A or 6B in FIG. 2 from the application developer or the materials developer, transmits a request based on the operation of the application developer or the materials developer to the materials development support device 14, and receives and displays a result of processing corresponding to the request. For example, the materials developer can develop materials by utilizing inference by artificial intelligence on the screen of the web application 6A or 6B displayed on the user terminal 12.

The materials development support device 14 is an information processing device, such as a PC or a workstation, on which the application developer develops the web application 6A or 6B in FIG. 2. Additionally, the materials development support device 14 is an information processing device, such as a PC or a workstation, that provides the materials developer with a service of the web application 6A or 6B in FIG. 2.

The materials development support device 14 is an information processing device, such as a PC or a workstation, on which the materials developer uses the web application 6A or 6B in FIG. 2. For example, the materials development support device 14 performs an inference process by artificial intelligence, such as image analysis or physical property prediction, based on an operation of the materials developer on the user terminal 12, and causes the user terminal 12 to display a result of the inference process to allow the materials developer to confirm the result.

The inference process by the artificial intelligence is performed using, for example, a machine learning model in which machine learning has been performed using training data. For example, the materials development support device 14 predicts, from the mixing ratio (an explanatory variable) of a material, the performance (an objective variable) of a product generated by the mixing, by using the machine learning model on which machine learning has been performed using the training data, based on an operation of adjusting the mixing ratio of the material received from the materials developer. The inference process by artificial intelligence can be realized by using a machine learning library, such as deep learning, classification, regression, or clustering.

Here, the materials development support system 10 in FIG. 3 is merely an example, and it is needless to say that various system configuration examples are available depending on the application and purpose. For example, the materials development support device 14 may be realized by multiple computers or may be realized as a service of cloud computing. Additionally, the materials development support system 10 in FIG. 3 may be realized by a stand-alone computer.

### <Hardware Configuration>

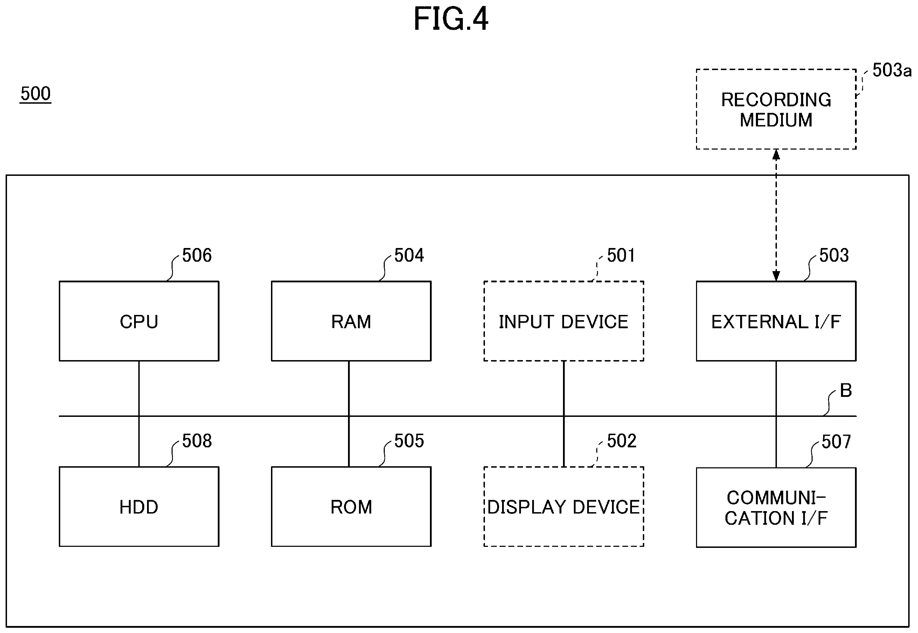

The user terminal 12 and the materials development support device 14 in FIG. 3 are realized by a computer 500 having a hardware configuration illustrated in FIG. 4, for example.

FIG. 4 is a hardware configuration diagram of an example of a computer according to the present embodiment. The computer 500 in FIG. 4 includes an input device 501, a display device 502, an external I/F 503, a RAM 504, a ROM 505, a CPU 506, a communication I/F 507, an HDD 508, and the like, which are connected to each other via a bus B. Here, the input device 501 and the display device 502 may be used in a state connected to the computer.

The input device 501 is a touch panel, operation keys and buttons, a keyboard and a mouse, or the like used by a user to input various signals. The display device 502 is configured by a display, such as a liquid crystal or organic EL display that displays a screen, a speaker that outputs sound data, such as voice or sound, and the like. The communication I/F 507 is an interface for the computer 500 to perform data communication.

Additionally, the HDD 508 is an example of a non-volatile storage device that stores programs and data. The stored programs and data include an OS, which is basic software for controlling the entire computer 500, applications for providing various functions on the OS, and the like. Here, the computer 500 may use a drive device (for example, a solid state drive (SSD)) using a flash memory as a storage medium, instead of the HDD 508.

The external I/F 503 is an interface with an external device. The external device includes a recording medium 503a. This allows the computer 500 to read and/or write data from/to the recording medium 503a via the external I/F 503. The recording medium 503a includes a flexible disk, a CD, a DVD, an SD memory card, a USB memory, and the like.

The ROM 505 is an example of a non-volatile memory (a storage device) that can retain programs and data even when the power is turned off. The ROM 505 stores programs and data, such as a BIOS to be executed when the computer 500 is started, OS settings, and network settings. The RAM 504 is an example of a volatile memory (a storage device) that temporarily stores the programs and data.

The CPU 506 is an arithmetic device that reads programs and data from the storage device, such as the ROM 505 or the HDD 508, onto the RAM 504 and executes processing to achieve control and functions of the entire computer 500. The computer 500 according to the present embodiment can achieve various functions of the user terminal 12 and the materials development support device 14, as described later, by executing the program. The CPU 506 may read the program from the recording medium 503a storing the program via the external I/F 503 and execute the program.

### <Functional Configuration>

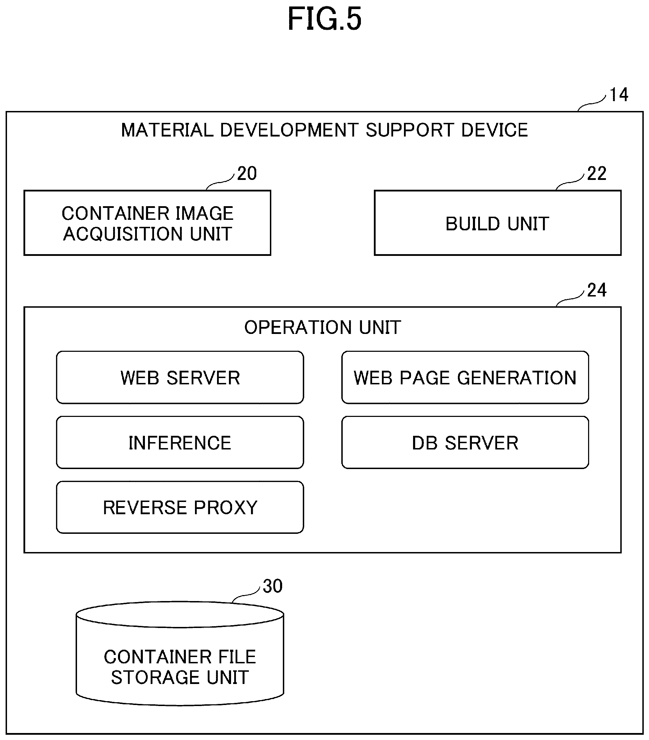

A configuration of the materials development support device 14 according to the present embodiment will be described. FIG. 5 is a functional configuration diagram of an example of the materials development support device according to the present embodiment. Here, in the configuration diagram of FIG. 5, unnecessary parts in the description of the present embodiment are omitted as appropriate.

The materials development support device 14 illustrated in FIG. 5 is configured to include a container image acquisition unit 20, a build unit 22, an operation unit 24, and a container file storage unit 30. The container image acquisition unit 20 can acquire a container image from a repository in Docker Hub, which is an example of a storage location of container images. For example, a container image of major software is often distributed via Docker Hub. The container image acquisition unit 20 acquires a necessary container image in accordance with the specifications of the web application 6A or 6B in FIG. 2, for example.

The build unit 22 builds the container image of the operating environment of the web application 6A or 6B in FIG. 2, for example. The build unit 22 builds the container image in accordance with a Docker file, which is an example of a file in which the contents of the container are described. Additionally, the build unit 22 can build a container image obtained by adding a new operating environment to the container image acquired by the container image acquisition unit 20, based on an update operation of the application developer with respect to the Docker file. For example, the build unit 22 can add an operating environment (for example, an operating environment of Python) for inference by artificial intelligence to the PHP container acquired by the container image acquisition unit 20, based on the update operation of the application developer with respect to the Docker file. Here, the build unit 22 may use the container image acquired by the container image acquisition unit 20 as it is, without adding a new operating environment.

The operation unit 24 reproduces, for example, the containers that cooperate as the web application 6A or 6B in FIG. 2 by launching the container image in accordance with "docker-compose.yml", which is an example of a file in which the configuration of one or more container images to be launched are described. For example, the operation unit 24 of FIG. 5 reproduces the operating environment of the software of the web server, the web page generation, the inference, the DB server, and the reverse proxy by launching the container image in accordance with "docker-compose.yml".

Additionally, the application developer can switch the operating environment in which the web application operates, such as the development environment or the production environment, by switching "docker-compose.yml", which is an example of a file in which the configuration of one or more container images to be launched is described.

The container file storage unit 30 stores the Docker file, which is an example of a file in which the contents of the container are described, "docker-compose.yml", which is an example of a file in which the configuration of one or more container images to be launched is described, a container file used by the materials development support device 14, and the like.

### <Process>

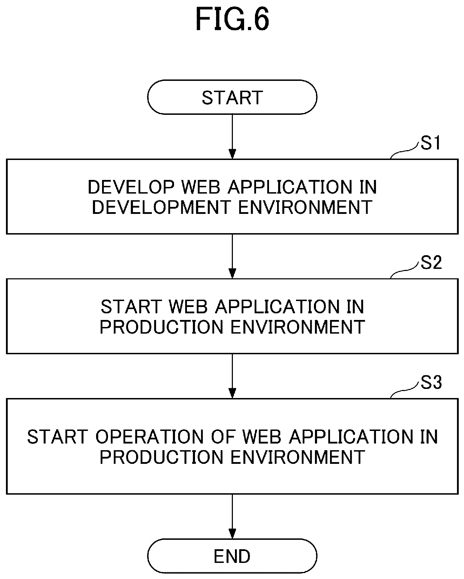

In the materials development support system 10 according to the present embodiment, the application developer develops the web application and the materials developer uses the web application in a procedure illustrated in FIG. 6, for example.

FIG. 6 is a flowchart illustrating an example of the procedure from development to use of the materials development support system according to the present embodiment. In step S1, the application developer develops the web application in the development environment. Processing of step S1 will be described in detail later.

When the development of the web application in the development environment is completed, the application developer starts the web application in the production environment in step S2. Processing of step S2 will be described in detail later.

After the processing of step S2, the materials developer can use the web application operating in the production environment by accessing a predetermined URL of the production environment in step S3.

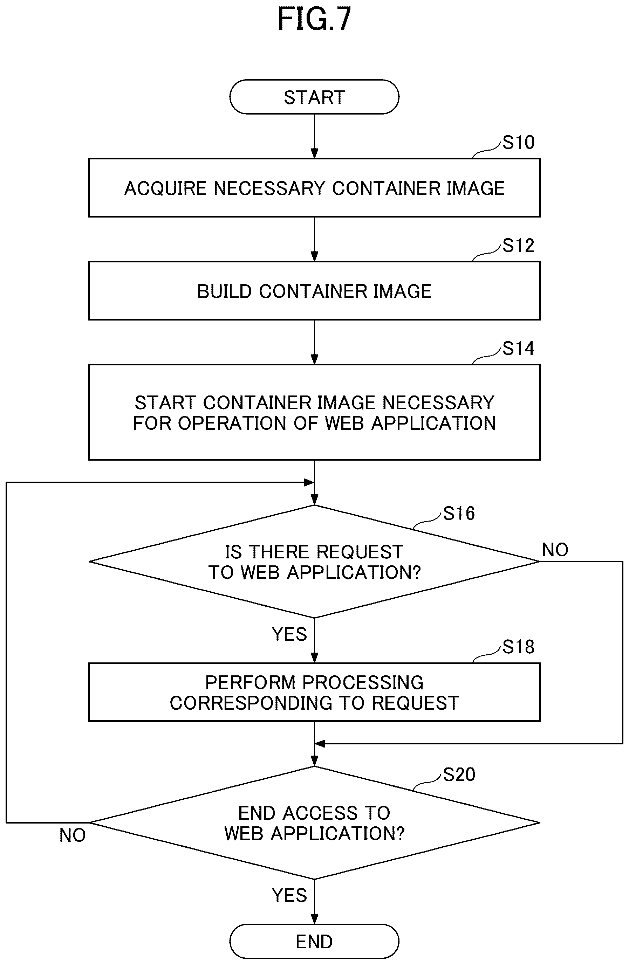

The web application development in the development environment of step S1 is performed, for example, according to a procedure illustrated in FIG. 7. FIG. 7 is a flowchart illustrating an example of the processing procedure of developing the web application in the development environment.

In step S10, the application developer performs an operation of causing the materials development support device 14 to acquire a container image necessary for the development. The container image acquisition unit 20 of the materials development support device 14 acquires the container image necessary for developing the web application from a storage location of the container image, such as the repository of Docker Hub, for example, based on the operation of the application developer.

In step S12, the application developer can add a new operating environment to the container image acquired by the container image acquisition unit 20, by updating the Docker file of the container image that needs to be customized. The build unit 22 of the materials development support device 14 builds the container image to which the new operating environment has been added, based on the update operation of the application developer with respect to the Docker file.

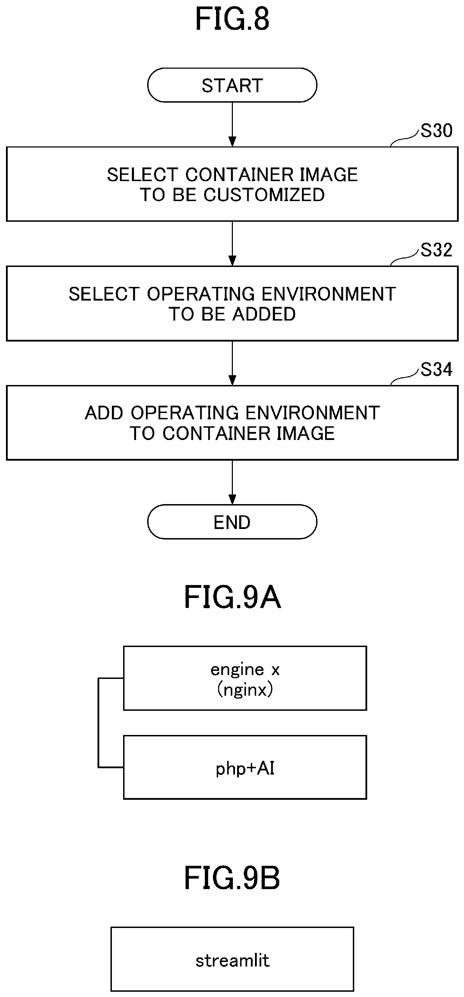

Step S12 is performed according to a procedure illustrated in FIG. 8, for example. FIG. 8 is a flowchart of an example of the processing of step S12. In step S30, the build unit 22 receives a selection operation of the container image to be customized from the application developer.

In step S32, the build unit 22 receives a selection of the operating environment to be added from the application developer. In step S34, the build unit 22 can build the container image to which the new operating environment has been added, based on the update operation of adding the operating environment selected in step S32 to the Docker file of the container image selected in step S30.

According to the processing in steps S10 and S12, an operating environment for inference by artificial intelligence can be added to the PHP container acquired by the container image acquisition unit 20. Here, the PHP container is an example of a container serving as a base of the web application.

Returning to step S14 in FIG. 7, the application developer sets "docker-compose.yml", which is an example of a file in which the configuration of one or more container images to be launched is described, in the materials development support device 14.

By the setting of "docker-compose.yml", the operation unit 24 can realize, for example, a web application in which containers illustrated in FIGS. 9A to 9C cooperate. FIGS. 9A to 9C are diagrams illustrating an example of a web application in which the containers cooperate.

FIG. 9A illustrates an example of a container of a web application in which an operating environment for performing inference by artificial intelligence is added to the full scratch PHP container. The container "php+AI" in FIG. 9A represents an example in which an artificial intelligence-related Python operating environment and library are added to the full scratch PHP container. The input/output files are stored in a mount folder. Here, the user management is performed by, for example, SQLite. The execution of the inference by the artificial intelligence is received by jQuery. The nginx container and the container "php+AI" in FIG. 9A are associated with each other by "docker-compose.yml" to cooperate.

FIG. 9B illustrates an example of a container of a web application in which an operating environment for performing inference by artificial intelligence is added to a Streamlit container. The Streamlit container in FIG. 9B is a single container that contains a set of operating environments for performing the inference by the artificial intelligence. An artificial intelligence-related Python operating environment and libraries are added to the Streamlit container. The input/output files are stored in the mount folder. Here, the user management is performed by, for example, SQLite.

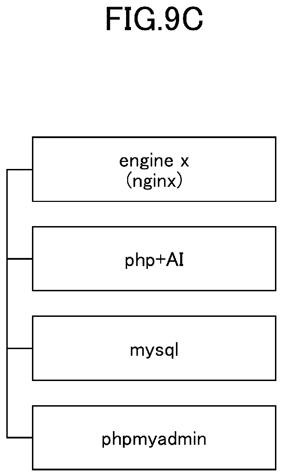

FIG. 9C illustrates an example of a container of a web application in which an operating environment for performing inference by artificial intelligence is added to a Laravel Sail container. The container "php+AI" in FIG. 9C represents an example in which an artificial intelligence-related Python operating environment and library are added to the Laravel Sail container. The input/output files are stored in the mount folder. The execution of the inference by the artificial intelligence is received by jQuery.

The nginx container, the container "php+AI", the mysql container, and the phpmyadmin container in FIG. 9C are associated with each other by "docker-compose.yml" to cooperate.

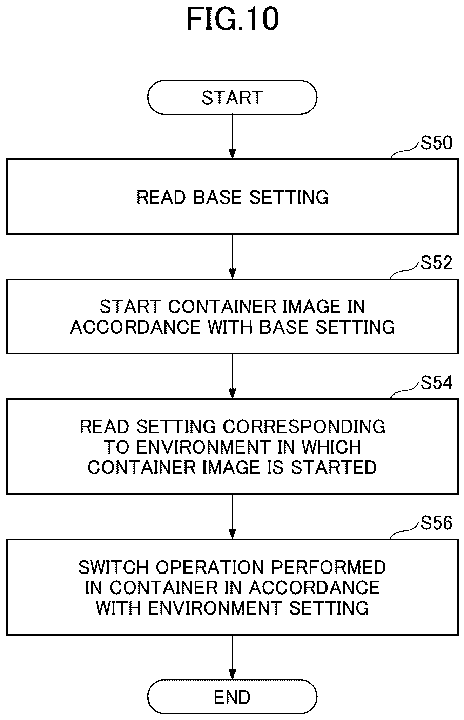

Step S14 is performed according to a procedure illustrated in FIG. 10, for example. Here, the description will be provided by using the container of the web application illustrated in FIG. 9A as an example. FIG. 10 is a flowchart of an example of the processing of step S14.

In step S50, the operation unit 24 reads "docker-compose.yml" as the base setting. In step S52, the operation unit 24 launches the container image necessary for the operation of the web application in accordance with the read base setting, and reproduces, for example, the containers that cooperate illustrated in FIG. 9A.

In step S54, the operation unit 24 reads "docker-compose.override.yml", which is a development setting corresponding to the development environment for launching the container image. In step S56, the operation unit 24 switches the method of launching the container reproduced in step S52 in accordance with the read development setting. For example, the operation unit 24 connects the containers of FIG. 9A that are reproduced in step S52 to each other via a network and opens a port. By the processing illustrated in FIG. 10, the web application operates in the development environment. The application developer can check the operation of the web application in the development environment.

Returning to step S16 in FIG. 7, the operation unit 24 determines whether there is a request to the web application. If there is no request to the web application, the operation unit 24 skips the processing of step S18. If there is a request to the web application, the operation unit 24 performs processing corresponding to the request in step S18. For example, the application developer can check whether the developed web application can correctly perform the processing corresponding to the request. The processing of steps S16 to S18 is repeated until the access to the web application ends.

The application developer may repeat the process of the flowchart illustrated in FIG. 7 until the development of the web application in the development environment is completed. When the development of the web application in the development environment is completed, the application developer starts the web application in the production environment. Here, the start of the web application in the production environment will be described using the flowchart of FIG. 10.

Here, the description will be provided by using the container of the web application in FIG. 9A as an example. In step S50, the operation unit 24 reads the base setting of the web application for which the development is completed.

In step S52, the operation unit 24 reproduces the containers that cooperate illustrated in FIG. 9A, for example, by launching the container image necessary for the operation of the web application for which the development is completed, in accordance with the read base setting.

In step S54, the operation unit 24 reads "docker-compose.prod.yml", which is a production setting corresponding to the production environment in which the container image is to be launched. In step S56, the operation unit 24 switches the method of launching the container reproduced in step S52, in accordance with the read production setting.

For example, the operation unit 24 connects the containers in FIG. 9A that are reproduced in step S52 to each other via a network, and further connects the reverse proxy container. By connecting the containers in FIG. 9A to the reverse proxy container via the network, the operation unit 24 can route the request to the reverse proxy container.

By the processing in step S2, which is described using FIG. 10, the web application is started in the production environment. The web application started in the production environment operates at the predetermined URL in the production environment. The materials developer can use the web application operating in the production environment by accessing the predetermined URL of the production environment in which the web application operates.

The reverse proxy container correctly routes a request from the materials developer for each web application when multiple web applications are operating in the same materials development support device 14, such as the same computer 500.

As described above, the materials development support system 10 according to the present embodiment employs the container virtualization technology and manages the virtual environment separately for each web application, thereby achieving improvement of the work efficiency and reduction of work errors by the application developer.

The information on the mixing ratio developed by the materials development support system 10 according to the present embodiment may be used as input information to a manufacturing device that manufactures a material in accordance with the information on the mixing ratio, for example. The manufacturing device operates to mix multiple raw materials in accordance with the information on the mixing ratio to produce the material.

Although the present embodiment has been described above, it will be understood that various changes in form and detail can be made without departing from the spirit and scope of the appended claims. The present invention is not limited to the above-described embodiments, and various modifications can be made within the scope of the claims. This application claims priority to Japanese Patent Application No. 2022-187354 filed on November 24, 2022, the entire contents of which are incorporated herein by reference.

### Description of reference symbols

5 container
6A, 6B web application
10 materials development support system
12 user terminal
14 materials development support device
18 communication network
20 container image acquisition unit
22 build unit
24 operation unit
30 container file storage unit

## Claims

1. An information processing device configured to perform inference by artificial intelligence in a container that is a virtual environment constructed by a container virtualization technology, the information processing device comprising:
a build unit configured to build a container image of an operating environment of software that causes the information processing device to perform a screen display, a database operation, and inference by artificial intelligence; and
an operation unit configured to perform the screen display, the database operation, and an operation of the inference by the artificial intelligence in the container reproduced by a launch of the container image.

2. The information processing device as claimed in claim 1, wherein the operation unit is configured to cause a plurality of said containers reproduced by the launch of the container image to cooperate as one web application.

3. The information processing device as claimed in claim 2, wherein the operation unit is configured to distribute, in a container that routes a request from a user to the container operating as the web application, the request to a plurality of said web applications.

4. The information processing device as claimed in claim 2 or 3, wherein the operation unit is configured to operate the web application in a development environment or a production environment by switching a method of launching the containers that cooperate as the one web application, in accordance with a file in which a configuration of one or more said container images to be launched is described.

5. The information processing device as claimed in claim 4,
wherein the web application operating in the development environment is accessible by a user who develops the web application, and
wherein the web application operating in the production environment is accessible by a user who uses the web application.

6. The information processing device as claimed in any one of claims 1 to 5, wherein the build unit is configured to add the operating environment of the software that causes the information processing device to perform the inference by the artificial intelligence, to the container image acquired from a storage location, based on an update operation of a user with respect to a file in which information for building the container image is described.

7. The information processing device as claimed in any one of claims 1 to 6, wherein the inference by the artificial intelligence relates to image analysis or physical property prediction used for materials development.

8. A program for causing an information processing device configured to perform inference by artificial intelligence in a container that is a virtual environment constructed by a container virtualization technology to perform:
a procedure of building a container image of an operating environment of software that causes the information processing device to perform a screen display, a database operation, and inference by artificial intelligence; and
a procedure of performing the screen display, the database operation, and an operation of the inference by the artificial intelligence in the container reproduced by a launch of the container image.

9. An inference method performed by an information processing device configured to perform inference by artificial intelligence in a container that is a virtual environment constructed by a container virtualization technology, the inference method comprising:
a step of building a container image of an operating environment of software that causes the information processing device to perform a screen display, a database operation, and inference by artificial intelligence; and
a step of performing the screen display, the database operation, and an operation of the inference by the artificial intelligence in the container reproduced by a launch of the container image.
